# EUROPEAN PATENT SPECIFICATION

(11) **EP 1 601 545 B1**
(45) Date of publication and mention of the grant of the patent: **16.02.2011**
(21) Application number: 04718460.1
(22) Date of filing: 08.03.2004
(51) Int. Cl.: B60K 7/00, B60L 11/18, H02K 7/14

(54) **WHEEL DRIVING ASSEMBLY**
RADANTRIEBSANORDNUNG
ENSEMBLE MOTEUR

(30) Priority: 07.03.2003 NL 1022873; 17.10.2003 NL 1024565
(43) Date of publication of application: 07.12.2005
(60) Divisional application: 10180511.7
(73) Proprietor: e-Traction Europe B.V., 7324 AL Apeldoorn (NL)
(72) Inventor: HEINEN, Adrianus, Johannes, NL-7317 AN Apeldoorn (NL)
(74) Representative: van Essen, Peter Augustinus
(86) International application number: PCT/NL2004/000170
(87) International publication number: WO 2004/078508

(56) References cited:
- EP-A- 0 588 478
- EP-A- 0 931 684
- WO-A-01/54939
- DE-A- 3 817 537
- DE-A- 4 434 237
- US-A- 5 438 228

## Description

The invention relates to a driving assembly comprising a wheel and driving means, and a vehicle provided with at least one such driving assembly.

It is common practice to drive a wheel using driving means such as a combustion engine, a (jet) turbine or for instance an electromotor. The drive is connected to the wheel via a reducing transmission, usually a gearbox with acceleration, or a continuously variable transmission (CVT) or the like.

On the other hand electromotors are known to be mounted in a wheel, as described in NL-A-1014182.

EP-A-0 588 478 describes an electromotor in a wheel using a number of schematic figures of such a wheel, without further dimensions and further details.

US-5438228 (D1) which represents the closet known prior art, discloses an electrically motorized wheel assembly. D1 teaches to provide a motorized wheel assembly having a ratio R1/R2 as close as possible to 1 where R1 is the distance between the air gap of the motorized assembly and the axis of rotation of the assembly, and R2 is the distance between the surface of a rim fixed onto the assembly, adapted to receive a tire, and the axis of rotation of the assembly.

It is an object of the invention to realise a driving system having an improved efficiency and having more versatile application possibilities.

To that end the invention provides a driving assembly according to claim 1.

By selecting such a ratio of the arm to the wheel's radius it is possible to on the one hand create a workable situation enabling to create a practical vehicle, and on the other hand come to an optimal efficiency.

Tests and research with respect to the electromotor in the wheel as described in the above-mentioned Dutch patent resulted in the discovery and the insight that the efficiency with respect to the embodiment described in NL-A-1014182 could be further improved when the arm of the driving moment is as close to the wheel's radius as possible.

It furthermore turned out that additional effects occurred that considerably reduced the nett loss of other energy using components. Due to the efficiency gain a motor having a lower capacity than expected could be used for the drive. The battery capacity necessary could thus be reduced. In addition several parts, such as the charger and other electronics could be designed more lightweight. As a result the necessary motor capacity could be further reduced. In the end a considerably more efficient drive than theoretically calculated turned out to be possible.

As a result the efficiency improvements could be realised that went beyond what had been calculated and known up until then.

The arm here is defined by the distance between the centre of the axis of rotation or the rotor and the line of action of the force the driving means exert on the driving shaft or the rotor in order to bring it into rotation.

A driving device according to the invention has turned out to be easy to realise construction technically when an electromotor is being used.

When using for instance an electromotor provided with a stator having windings and a rotor having permanent magnets mounted around it (a so-called external running rotor; "buitenloper"), wherein the stator is stationary and connected to a vehicle and the rotor having the permanent magnets rotates about the stator and is connected to a wheel shaft of the wheel and to the wheel, the arm will be half the inner diameter of the rotor, e.g. the inner radius of the rotor. Such a set-up makes it possible to realise a driving device according to the invention of surprisingly high efficiency.

The etectromotor may also comprise windings that are mounted on a driving shaft as rotor and the permanent magnets may be statically mounted outside of the stator. Here the arm is half the diameter of the rotor. Variations may be possible.

In an embodiment the stator will comprise the windings and the rotor will comprise the permanent magnets. As a result no complex supply of electric power is necessary, and the construction of the electromotor can be simple. Furthermore the connection or building in into a vehicle can be simple. An internal running rotor ("binnenloper") may again be opted for here, wherein the rotor rotates within the windings, and an external running rotor ("buitenloper"), wherein the rotor rotates about the windings. In order to realise an as large as possible drive ratio the external running rotor ("buitenloper") is preferred.

In an embodiment the wheel is provided with a tyre, preferably a pneumatic tyre. The radius of the wheel also comprises the tyre thickness. For a vehicle provided with a tyre the choice for a driving assembly according to the invention thus is even less obvious.

In a further embodiment for a simple mounting the driving means are mounted by means of connection means that allow an angle between the wheel shaft and the driving shaft of the driving means. Examples of such connection means are a differential transmission, use of a so-called homokinetic coupling, or such like means.

In an embodiment the windings are statically connected to the vehicle, and permanent magnets are arranged around the windings and connected to the driving shaft. As a result a simple construction is possible because the supply of electric power is simple. In addition the rotor on which the magnets have been mounted can be designed lightweight.

In an embodiment of the driving assembly according to the invention the drive ratio is larger than 0.65. The right choice of driving means appeared to render this ratio feasible. In a further embodiment the drive ratio is larger than 0.7. However, this does mean that high demands are made on the design of the driving means.

In an embodiment the drive ratio is smaller than 1.0, preferably smaller than 0.95. A right selection of the material and type of wheels has to be made here. For instance when using pneumatic tyres exceptional types and models of pneumatic tyres will have to be opted for.

In an embodiment of the driving assembly according to the invention, the electromotor proved to be particularly suitable for use in a driving assembly according to the invention. For instance an electromotor provides high torque at low-speed. Moreover careful design will result in the realisation of a drive that complies with the demands the invention makes on the drive ratio.

In a further embodiment thereof the electromotor is a synchronous motor provided with permanent magnets. In this way the motor can have a simple design. Moreover due to using permanent magnets the motor can be built sufficiently compact.

In an embodiment of the driving assembly according to the invention, said electromotor comprises a stator provided with windings which with respect to a vehicle are statically arranged in the vehicle and a rotor provided with permanent magnets. As a result the electromotors can be built sufficiently compact for use in the invention.

In an embodiment the driving means comprise operating means and control means for the operation of the electromotor within the stator, preferably against the stator.

In a further embodiment the rotor is arranged coaxially about the stator and is connected to a driving shaft of the electromotor (external running rotor; "buitenloper").

In an embodiment the driving means are mounted adjacent to the wheel.

In an embodiment the driving means comprise a driving shaft and the driving shaft and the wheel shaft are in line, aligned.

In an embodiment the driving shaft and the wheel shaft are connected for direct driving.

In an embodiment wherein the driving means comprise a driving shaft, the driving shaft directly drives the wheel shaft. In a special embodiment thereof the driving shaft is the wheel shaft.

In an embodiment of the driving assembly wherein the electromotor is provided with permanent magnets, the permanent magnets are connected to the wheel shaft.

Optionally the wheel shaft and the driving shaft may be connected by means of a connection that allows the longitudinal axis of the wheel shaft and the longitudinal axis of the driving shaft to be at an angle that does not equal 180 degrees. Examples of such a connection are a differential transmission and a homokinetic coupling.

In an embodiment it appears that the efficiency can be even further improved, and particularly the energy consumption of a vehicle provided with such a driving assembly according to the invention or as described above can be further improved when the electromotor provides a torque of at least 0.3 Nm/kg vehicle mass. An even better achievement appears to be possible at at least 0.4 Nm/kg vehicle mass. This torque is the maximum nominal torque. An electromotor, for instance, may provide as much as twice its maximum (nominal) torque for a short while. However, it has turned out that a great efficiency advantage can be achieved with the described, at first sight large, over-dimensioning.

Another aspect of the invention regards a driving assembly for a vehicle, comprising a wheel provided with a wheel shaft, and an electromotor comprising a driving shaft, a rotor and a stator, wherein the driving shaft is connected to the wheel shaft for direct driving and the electromotor is arranged next to the wheel.

This results in a surprisingly energy-efficient drive.

In an embodiment thereof the wheel shaft and the driving shaft are arranged in line. Furthermore other embodiments as mentioned above are also possible.

The invention relates to a particular electromotor, and a vehicle which is driven in a particular way using an electromotor.

In practice electromotors are known in various embodiments. A problem with the known electromotors is that the quantity of torque provided often is difficult to set. In addition the operation of several electromotors often is difficult to adapt to each other. Moreover it is hard to adapt the provided torque of an electromotor to the wanted application and to dimension the electromotor such that is can be used for various applications.

It is an object of the invention to at least partially overcome the said drawbacks.

It is a further object of the invention to provide an electromotor that is multipurpose and easy to scale up and deploy, for instance in a vehicle.

It is a further object of the invention to provide an improved vehicle having an advantageous fuel consumption.

To that end the invention provides an electromotor comprising a housing provided with:
- a stator connected to the housing and comprising at least two groups of physically separated windings;
- a rotor, coaxial rotatably mounted within the stator and comprising permanent magnets;
- control means for controlling the electric power and its phase in the windings;
- measuring means for measuring the current through the windings and the angular position of the rotor with respect to the stator;
- operating means connected to the control means and the measuring means for operating the electromotor, and
- data communication means, connected to the operating means, for communicating data to outside of the housing. The invention further relates to a vehicle provided with a wheel having a wheel shaft having an axis of rotation and a electromotor provided with a rotor having an electromotor axis of rotation, wherein the electromotor is placed in the vehicle with the electromotor axis of rotation mounted above the axis of rotation of the wheel.

By opting for an electromotor according to the invention an electromotor is obtained having an adjustable torque. Moreover it is possible to connect several motors to each other. To that end among others the housing is provided with attachment means.

The placing of the motor in the vehicle makes it possible to make a vehicle having an advantageous ratio between the diameter of the air slit and the diameter of the wheel. As a result an energy-efficient vehicle can be developed. Especially in combination with the motor according to the first aspect of the invention, a vehicle having advantageous properties can be developed. In particular the driving shaft of the electromotor directly drives the wheel shaft.

In an embodiment of the electromotor the measuring means comprise at least two means for measuring a magnetic field, arranged between two permanent magnets. Particularly by means of feedback of measurement values of the measuring means, whether or not directly, to the control means, the control means are able to optimize the phase of the current or voltage to realise a maximum effectiveness.

In an embodiment of the electromotor both ends of the rotor comprise attachment means for a driving shaft. In particular one end comprises an attachment means that is able to cooperate with the attachment means at the other end. In this way the rotors of this type of electromotors can be connected to each other. The rotor may for instance be provided with a continuous hole. When two or more similar electromotors are placed one after the other with the rotors in line with each other, the rotors can be connected to one another by means of a driving shaft through the holes. In another embodiment one of the attachment means comprises a bush in which a shaft's end can be operationally connected to the rotor. The other attachment means can be adapted to attach a shaft thereon.

In a further embodiment the operating means have a so-called "master" and "slave" setting, wherein the operating means can be converted from a so-called "master" into "slave" setting, and vice versa, influenced by either the demand for power, or the speed of rotation of the rotor, or via the data communication means. In an assembly of at least two of such electromotors one is set as so-called "master" and the other or others as so-called "slave", and wherein the data communication means are mutually connected for each to exchange data with the other electromotor or electromotors.

In an embodiment of the electromotor according to the invention an end of the rotor is provided with a homokinetic coupling.

In an embodiment of the vehicle according to the invention the electromotor axis of rotation is substantially parallel to the axis of rotation of the wheel.

In an embodiment the rotor is coupled to the wheel shaft by means of one or more homokinetic couplings.

The invention will be further elucidated on the basis of an exemplary embodiment of a directly driven wheel according to the invention, in which:
Figure 1 shows a side view of a wheel having a driving unit according to the invention;
Figure 2 shows a side view in cross-section of the wheel of figure 1;
Figure 3 shows a particular electromotor according to another aspect of the invention;
Figure 4 shows an application of the motor of figure 3 in a driving assembly according to the invention.

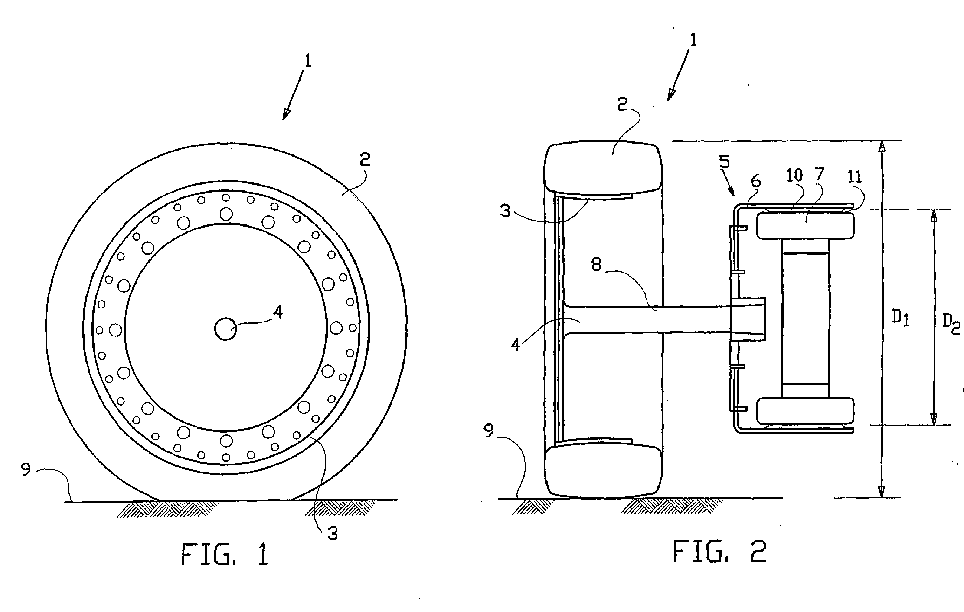

Figure 1 shows a side view of a directly driven wheel 1 according to the invention. Here a tyre 2 is mounted onto a rim 3 which is connected to a wheel shaft 4. The wheel itself has an outer diameter D1.

On the wheel shaft 4 an electromotor 5 is mounted, wherein the driving shaft 8 is connected to the wheel shaft 4. In the embodiment shown the driving shaft and the wheel shaft form one unity.

The electromotor is provided here with a so-called synchronous motor, provided with a rotor 6 having permanent magnets 10 having within there the stator with windings 7. Here the permanent magnets 10 are connected via the rotor 6 to the driving shaft 8, and the windings 7 are stationary connected with respect to a vehicle and form the stator, wherein the rotor 6 runs about the stator. As a result a simple, lightweight and reliable construction is achieved, and the driving device according to the invention can be realised in a simple manner.

The windings may also be connected to the driving shaft and the permanent magnets stationary with a vehicle. In addition it is of course also possible to mount the permanent magnets within the windings and to mount either the permanent magnets or the windings stationary.

In the electromotor as shown in figure 1 the powers engage at a distance D2/2 from the centre of the driving shaft 8. D2 is the inner diameter of the rotor. That means that the arm of the moment generated by the electromotor is D2/2.

According to the invention D2/D1 is > 0.57. It has appeared that the closer D2 approaches D1, the larger the efficiency will be, and the bigger the additional effect of the ever-reducing losses.

Figure 2 shows a side view in cross-section of the wheel of figure 1. In the side view the air slit 11 between the permanent magnets 10 and the windings 7 is indicated. For the unambiguity of the invention the electromotor diameter is indicated as D2. Said diameter is the inner diameter of the rotor.

In connection with the thickness of a pneumatic tyre, which is preferred for vehicles for transporting materials and persons by road, and the maximum electromotor diameter, the following will be preferred: 1 > D2/D1 > 0.65.

Preferably the electromotor as regards build-up is almost identical to the electromotor as described in WO-A1-01154939. Various driven wheels may also cooperate in one vehicle as described in said patent application.

Together with the tyre 2 the wheel runs over a surface 9.

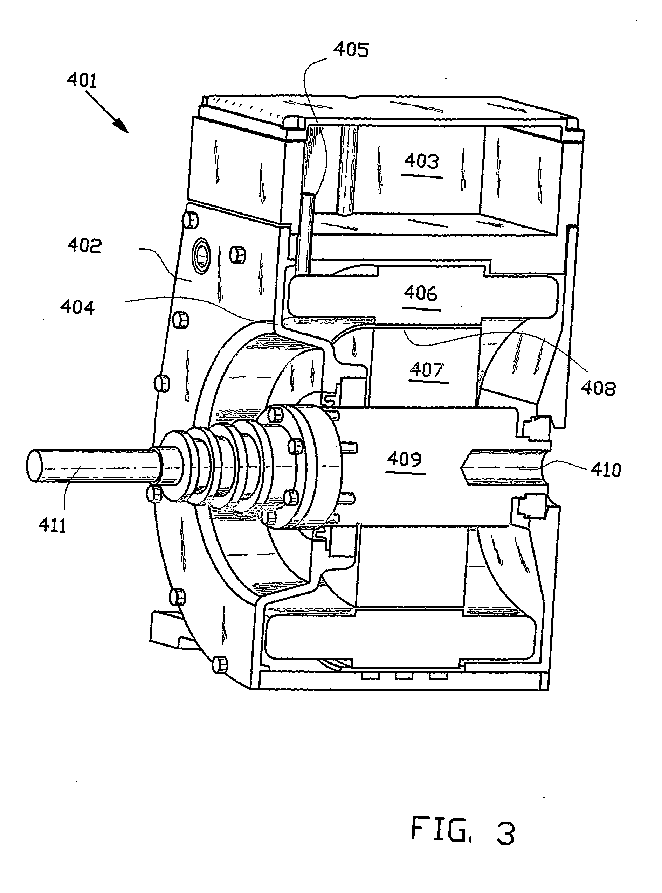

Figure 3 shows an electromotor 401 provided with a housing 402 which is subdivided into a first compartment 403 for operating and control means and a second compartment provided with the actual electromotor and a passage for cables 405 for the supply of measurement data to the electronics in compartment 403. In an embodiment the electromotor is arranged outside of a wheel.

The electromotor is provided with windings 406 which in the motor compartment of the electromotor are attached to the housing. The electromotor is furthermore provided with a rotor 407, rotatably mounted in the motor section of the housing and coaxial to the stator windings 406. The rotor is provided with permanent magnets 408.

In order to connect two or more electromotors to each other the housing is provided with attachment means for connecting the housings to each other. In addition the axial ends of the rotor are provided with means for drivingly connecting the rotor to rotors of other such electromotors. The rotor may for instance be provided with a hole that runs axially through the entire rotor. A long shaft may then run through all rotors to connect the rotors to each other. This shaft may for instance be provided with a cam, which cooperates with recesses in the hole to let the shaft co-rotate with the rotor.

Particular here is that the rotor is provided with a rotor shaft 409 provided with a bush 410 in which a shaft's end can be accommodated to operationally connect it to the rotor shaft, and at the other end of the shaft with attachment means for connecting a homokinetic coupling 411 to the other end of the rotor. The housing 402 is furthermore provided with attachment means to attach a similar housing to this housing.

When subsequently the electronic components, particularly the data communication means, particularly a data communication means to transmit and receive digital data, either optically, wireless or via a cable connection, or in a (digital) network for instance communicating via the TCP/IP protocol, are connected to each other, one single electromotor as to functionality is created.

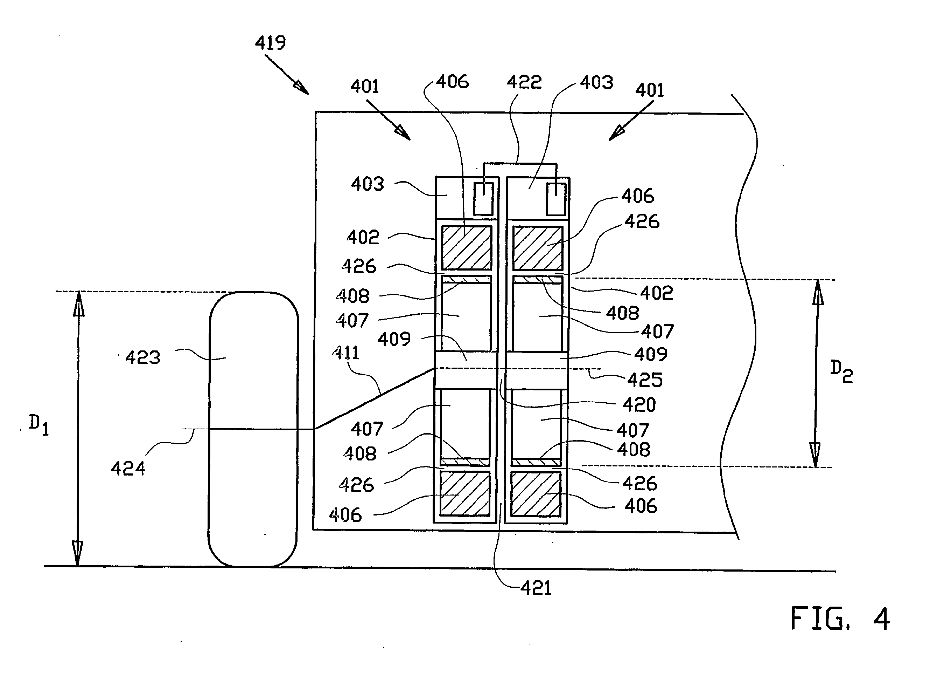

Figure 4 shows a part of a vehicle 419 here provided with two electromotors 401 as described in figure 3, which are operationally connected one to the other by means of a connecting shaft 420. The electronics for the operation of both electromotors, housed in compartment 403, are connected one to the other by means of connection 422. Particularly the data communication means are connected one to the other so that the two motors as to functionality form one motor. The housing, connections and couplings of the rotor are such that any number of identical electromotors can be coupled one to the other into one operational unity, which operate in mutual cooperation as one single electromotor. By means of a shaft 411 provided with two flexible bending points, for instance a homokinetic coupling or double homokinetic coupling, the motors are connected to a wheel 423 provided with a wheel shaft 424. The wheel has a diameter D1. The air slit 426 here has a diameter D2. As a result of the set-up shown here it is possible to choose an air slit diameter that is very large in comparison to the diameter of the wheel, the diameter of the air slit D2 may even be so large as to be larger than the diameter D1 of the wheel. As a result of this manner of direct driving, very large energy gains can be achieved. By connecting two electromotors as described here, it is possible to make a drive that is able to make use of standardised electromotors according to a further aspect of the invention. Said electromotors are described in figure 3. For instance a lightweight passenger car can be equipped with an electromotor according to figure 3 on either side of one wheel, and for instance a truck or a larger passenger car can be equipped with two mutually connected electromotors per wheel as shown in figure 4.

The electronic control for the electromotor according to the invention as shown in figure 3 is modularly built up from several elements. The various elements are hierarchically adjusted to each other. The following elements can be distinguished.

### 1 . Power modules

At the lowest step IGBT main current modules have been used. The structure present in these IGBT main current modules renders them highly reliable per se and guarantees a low heat emission and optimal efficiency. The main current modules regulate the current through the windings. The windings are divided into three groups, each having another phase. Per winding there are two main current modules. The main current modules are controlled by a higher step, namely:

### 2 . Current regulators

At the second step two IGBT main current modules are connected to a current regulator and are controlled by the current regulators. Together with a separate current sensor operating according to the Hall principle (Hall sensor), they form an independent end step, which controls the current in the accompanying motor winding. In this step the module and the current regulator are already galvanically separated from the operation electronics. A current regulator having two main current modules and Hall sensor are further called 4Q-modules. The main current modules with current regulator form a control system. There is a control system per winding.

### 3. Vector generator

The vector generator supplies a control value to the so-called 4Q-modules (step 1 and 2), which thus generates a magnetic field vector by means of the windings of the synchronous motor and thus defines the moment of torque.

A so-called encoder or resolver, a measuring apparatus that highly accurately measures the angle and the number of revolutions, makes the actual position of the rotor with respect to the stator known to the vector generator. The quick calculation of the rotor position, and the feedback value connected to it, ensures an optimal setting of the field vectors of the motor together with programmable logic modules, the so-called FPGAs. The rotor position can also be recorded.

Due to the combination of a microprocessor and the FPGAs the entire function of the vector generator is fully programmable over an optical fibre cable or electrical cable whichever is desired. Preferably each electromotor is provided with a network functionality to for instance be able to communicate via a TCP/IP protocol and to be able to be part of a computer network. This means that new data or amendments necessary for a particular application can be implemented directly (via telephone or the internet) into the already operational wheel according to the invention. These amendments do not only regard the software of the FPGAs, but also the hardware of the modules.

It is for instance possible to change the ratio of the motor itself when a winding or a module should fail so that the wheel can remain operational, The vector generator forms the operation system. The encoder and the Hall sensors and the accompanying electronics in the described embodiment form the measuring system.

### 4. CPU or Central Processing Unit

The first three steps are housed together in the electromotors. The CPU is situated outside of the electromotor and communicates with the various motors according to the invention that may be present on a vehicle by means of an optical ring data bus line (ORDABUL) or another computer network connection. It is also able to carry out the necessary calculations for the AGVs (automatically guided vehicles) as regards the road covered, odometrics when taking bends and diagnosing the complete driving concept. Each step guards and reports the information important to the operational condition to the CPU. An error report is immediately reported to the step above it and this one immediately responds by taking the necessary measures before damage may arise. The step above is able to activate an emergency program, which responds correctly to the error. As a result an error in one module hardly affects the entire vehicle.

The modular system enables to make a simple error diagnosis and to quickly locate the relevant components without subsequently having to carry out difficult adjusting or setting activities.

An important difference with the common control of Asynchronous/synchronous motors is the fact that all motor windings, in a preferred embodiment subdivided into three groups, each preferably consisting of 30 independent windings, are electrically separated from each other and each winding is controlled by its own 4Q-module. The 4Q-modules are only connected to each other by means of supply voltage, which results in the following advantages.
1: Only two phases of the usual three-phase control are guarded and controlled. The currents in the third phase are calculated from the behaviour of the other two phases. This means a much greater freedom in operating the electronics, and for instance when offsetting the failure of one or more modules.
2: The current distribution can be exactly adjusted such that each motor winding generates exactly the same field strength. As a result the actual moments of torque in each winding, generated by the field, are adjustable and independent from the deviations in the electric variables of the separate windings.
3: The magnetic tolerances of each winding can be calibrated separately by means of the vector generator.
4: When a 4Q-module fails or one of the windings is short-circuited, the motor can still remain operational. A fuse or relay can separate the defect module or phase from the other two 4Q-modules or phases without affecting them. Thus the motor is still able to brake, or when several wheels are used, support them. Here in particular the advantages of a step-wise structure manifest themselves.

It will be clear that the above description is only included to illustrate the operation of the preferred embodiments and not to limit the scope of protection of the present invention. Variations and designs of the embodiments discussed in the description above that are evident to an expert also fall within the scope of protection of the present invention.

## Claims

1. Driving assembly for a vehicle running on a road surface, comprising a wheel (1, 423) having a wheel axis of rotation and driving means comprising an electromotor (5, 401) which when operative exert a driving moment on the wheel, said wheel having an exterior surface for engaging a road surface (9) while the driving assembly is in operation, **characterised in that** a drive ratio, being the inner radius of the rotor (D²/₂). divided by the size of the wheel's radius (D¹/₂) is larger than 0.57.

2. Driving assembly according to claim 1, wherein the drive ratio is larger than 0.65, in particular larger than 0.7.

3. Driving assembly according to claim 1 or 2, wherein the drive ratio is smaller than 1.0, preferably smaller than 0.95.

4. Driving assembly according to one or several of the preceding claims, wherein the electromotor (5, 401), is a synchronous motor provided with permanent magnets (10, 408).

5. Driving assembly according to claim 4, wherein the electromotor (5, 401) comprises a stator provided with windings (7, 406) which with respect to a vehicle are statically arranged in the vehicle and a rotor (6, 407) provided with permanent magnets (10, 408).

6. Driving assembly according to claim 5, comprising operating means and control means for the operation of the electromotor within the stator.

7. Driving assembly according to claim 6, wherein the rotor is arranged coaxially about the stator and is connected to a driving shaft of the electromotor.

8. Driving assembly according to any one of the preceding claims, wherein the driving means are mounted outside of and adjacent to the wheel.

9. Driving assembly according to any one of the preceding claims, wherein the driving means comprise a driving shaft and the wheel a wheel shaft, and the driving shaft and the wheel shaft are in line, aligned.

10. Driving assembly according to any one of the preceding claims, wherein the driving means comprise a driving shaft and the wheel a wheel shaft, wherein the driving shaft directly drives the wheel shaft, wherein preferably the driving shaft is the wheel shaft.

11. Driving assembly according to claim 5, wherein the wheel comprises a wheel shaft and the permanent magnets are connected to the wheel shaft.

12. Driving assembly according to any one of the preceding claims for a vehicle having a vehicle mass and the wheel having a wheel shaft, wherein the driving means comprise an electromotor having a driving shaft that directly drives the wheel shaft, wherein the electromotor has a maximum nominal torque of at least 0.3 Nm/kg vehicle mass, preferably at least 0.4 Nm/kg vehicle mass.

13. A driving assembly according to any one of the preceding claims, comprising:
a wheel (1, 423) comprising a rotational axis, and a first radius extending from the rotational axis to an exterior surface of the wheel for engaging road surface (9) while the driving assembly is in operation;
an electric motor (5, 401) that directly drives the wheel, wherein the electric motor (5, 401) includes a rotor (6, 407) situated around the rotational axis at a second radius from the rotational axis, and a stator situated around the rotational axis at a third radius from the rotational axis, wherein the second radius is different from the third radius;
a gap (11, 426) situated around the rotational axis between the rotor (6, 407) and the stator; and
wherein the electric motor, while in operation, exerts torque that drives the wheel, the torque having an arm extending from the rotational axis to a surface of the gap (11, 426) adjacent to the rotor (6, 407), and
wherein the driving assembly has a drive ratio, defined as the arm of the torque divided by the first radius, which is larger than 0.57.

14. Vehicle, comprising at least two driving assemblies according to any one of the preceding claims.

## Patentansprüche

1. Antriebsanordnung für ein Fahrzeug, das auf einer Straßenfläche fährt, mit einem Rad (1, 423), das eine drehbare Radachse aufweist, und mit Antriebsmittel umfassend einen Elektromotor (5, 401), der, wenn er in Betrieb ist, ein Antriebsmoment auf das Rad ausübt, wobei das Rad eine äußere Fläche in Kontakt mit der Straßenfläche (9) aufweist, wenn die Antriebsanordnung in Betrieb ist, **dadurch gekennzeichnet, dass** ein Übersetzungsverhältnis, das der innere Radius des Rotors (D2/2) geteilt durch die Größe des Radradius (D1/2) ist, größer als 0,57 ist.

2. Antriebsanordnung nach Anspruch 1, wobei das Übersetzungsverhältnis größer als 0,65, insbesondere größer als 0,7 ist.

3. Antriebsanordnung nach Anspruch 1 oder 2, wobei das Übersetzungsverhältnis kleiner als 1,0, vorzugsweise kleiner als 0,95 ist.

4. Antriebsanordnung nach einem oder mehreren der vorhergehenden Ansprüche, wobei der Elektromotor (5, 401) ein Synchronmotor mit Permanentmagneten (10, 408) ist.

5. Antriebsanordnung nach Anspruch 4, wobei der Elektromotor (5, 401) einen Stator, der mit Windungen (7, 406) versehen ist, die mit Bezug auf das Fahrzeug feststehend in dem Fahrzeug angeordnet sind, und einen Rotor (6, 407), der mit Permanentmagneten (10, 408) versehen ist, umfasst.

6. Antriebsanordnung nach Anspruch 5, umfassend Betriebs- und Steuermittel zum Betreiben des Elektromotors in dem Stator.

7. Antriebsanordnung nach Anspruch 6, wobei der Rotor koaxial um den Stator angeordnet und mit einer Antriebswelle des Elektromotors verbunden ist.

8. Antriebsanordnung nach einem der vorhergehenden Ansprüche, wobei die Antriebsmittel außerhalb des Rads und benachbart zu diesem angeordnet sind.

9. Antriebsanordnung nach einem der vorhergehenden Ansprüche, wobei die Antriebsmittel eine Antriebswelle und das Rad eine Radachse umfassen und die Antriebswelle und die Radachse auf einer Linie angeordnet sind.

10. Antriebsanordnung nach einem der vorhergehenden Ansprüche, wobei die Antriebsmittel eine Antriebswelle und das Rad eine Radachse umfassen, wobei die Antriebswelle die Radachse direkt antreibt, wobei vorzugsweise die Antriebswelle die Radachse ist.

11. Antriebsanordnung nach Anspruch 5, wobei das Rad eine Radachse umfasst und die Permanentmagneten mit der Radachse verbunden sind.

12. Antriebsanordnung nach einem der vorhergehenden Ansprüche für ein Fahrzeug mit einer Fahrzeugmasse, wobei das Rad eine Radachse aufweist, wobei die Antriebsmittel einen Elektromotor mit einer Antriebswelle umfassen, die die Radachse direkt antreibt, wobei der Elektromotor ein maximales Nenndrehmoment von wenigstens 0,3 Nm/kg Fahrzeugmasse, vorzugsweise wenigstens 0,4 Nm/kg Fahrzeugmasse aufweist.

13. Antriebsanordnung nach einem der vorhergehenden Ansprüche, umfassend:
ein Rad (1, 423), umfassend eine Drehachse und einen ersten Radius, der sich von der Drehachse zu einer äußeren Radfläche in Kontakt mit der Straßenfläche (9) erstreckt, während die Antriebsanordnung in Betrieb ist;
einen Elektromotor (5, 401), der das Rad direkt antreibt, wobei der Elektromotor (5, 401) einen Rotor (6, 407) umfasst, der sich in einem zweiten Radius von der Drehachse um die Drehachse befindet, und einen Stator, der sich in einem dritten Radius von der Drehachse um die Drehachse befindet, wobei der zweite Radius sich vom dritten Radius unterscheidet;
einen Spalt (11, 426), der sich um die Drehachse zwischen dem Rotor (6, 407) und dem Stator befindet; und
wobei der Elektromotor, während er in Betrieb ist, ein Drehmoment ausübt, das das Rad antreibt, wobei das Drehmoment einen Arm aufweist, der sich von der Drehachse zu einer Fläche des Spaltes (11, 426) benachbart zu dem Rotor (6, 407) erstreckt, und wobei die Antriebsanordnung ein Übersetzungsverhältnis aufweist, das als der Arm des Drehmoments geteilt durch den ersten Radius definiert ist, welches größer als 0,57 ist.

14. Fahrzeug, umfassend wenigstens zwei Antriebsanordnungen nach einem der vorhergehenden Ansprüche.

## Revendications

1. Dispositif d'entraînement pour un véhicule se déplaçant sur la surface d'une route, comprenant une roue (1, 423) munie d'un axe de rotation, et des moyens d'entraînement qui comprennent un moteur électrique (5, 401) et qui, lorsqu'ils sont opérants, appliquent un couple de transmission à la roue, ladite roue comportant une surface extérieure pour une venue en contact avec la surface (9) d'une route au cours du fonctionnement dudit dispositif d'entraînement, **caractérisé par le fait qu'**un rapport de transmission, exprimé par le rayon intérieur (D2/2) du rotor divisé par la cote (D1/2) du rayon de la roue, est supérieur à 0,57.

2. Dispositif d'entraînement selon la revendication 1, dans lequel le rapport de transmission est supérieur à 0,65, notamment supérieur à 0,7.

3. Dispositif d'entraînement selon la revendication 1 ou 2, dans lequel le rapport de transmission est inférieur à 1,0, de préférence inférieur à 0,95.

4. Dispositif d'entraînement selon l'une ou plusieurs des revendications précédentes, dans lequel le moteur électrique (5, 401) est un moteur synchrone muni d'aimants permanents (10, 408).

5. Dispositif d'entraînement selon la revendication 4, dans lequel le moteur électrique (5, 401) comprend un stator doté d'enroulements (7, 406) qui, vis-à-vis d'un véhicule, sont agencés statiquement dans ledit véhicule, et un rotor (6, 407) pourvu d'aimants permanents (10, 408).

6. Dispositif d'entraînement selon la revendication 5, comprenant des moyens d'actionnement et des moyens de commande, à l'intérieur du stator, en vue de l'actionnement du moteur électrique.

7. Dispositif d'entraînement selon la revendication 6, dans lequel le rotor est agencé coaxialement autour du stator, et est relié à un arbre menant du moteur électrique.

8. Dispositif d'entraînement selon l'une quelconque des revendications précédentes, dans lequel les moyens d'entraînement sont montés à l'extérieur de la roue, à laquelle ils sont adjacents.

9. Dispositif d'entraînement selon l'une quelconque des revendications précédentes, dans lequel les moyens d'entraînement comprennent un arbre menant, et la roue comporte un arbre de roue, ledit arbre menant et ledit arbre de roue étant en coïncidence alignée.

10. Dispositif d'entraînement selon l'une quelconque des revendications précédentes, dans lequel les moyens d'entraînement comprennent un arbre menant, et la roue comporte un arbre de roue, ledit arbre menant entraînant directement ledit arbre de roue, lequel arbre menant se présente, de préférence, comme ledit arbre de roue.

11. Dispositif d'entraînement selon la revendication 5, dans lequel la roue comporte un arbre de roue, et les aimants permanents sont reliés audit arbre de roue.

12. Dispositif d'entraînement selon l'une quelconque des revendications précédentes, pour un véhicule présentant une masse, la roue comportant un arbre de roue, dans lequel les moyens d'entraînement comprennent un moteur électrique muni d'un arbre menant qui entraîne directement ledit arbre de roue, ledit moteur électrique présentant un couple nominal maximal d'au moins 0,3 Nm/kg de masse du véhicule, de préférence d'au moins 0,4 Nm/kg de masse dudit véhicule.

13. Dispositif d'entraînement selon l'une quelconque des revendications précédentes, comprenant :
une roue (1, 423) comportant un axe de rotation et un premier rayon s'étendant depuis ledit axe de rotation jusqu'à une surface extérieure de ladite roue, pour une venue en contact avec la surface (9) d'une route au cours du fonctionnement dudit dispositif d' entraînement ;
un moteur électrique (5, 401) qui entraîne directement la roue, ledit moteur électrique (5, 401) comportant un rotor (6, 407) situé autour de l'axe de rotation, à un deuxième rayon à partir dudit axe de rotation, et un stator situé autour de l'axe de rotation, à un troisième rayon à partir dudit axe de rotation, le deuxième rayon étant différent du troisième rayon ;
un interstice (11, 426) réservé autour de l'axe de rotation, entre le rotor (6, 407) et le stator ;
sachant que ledit moteur électrique développe, lorsqu'il est opérant, un couple qui entraîne la roue, ledit couple présentant un bras s'étendant depuis l'axe de rotation jusqu'à une surface de l'interstice (11, 426) occupant une position adjacente audit rotor (6, 407), et que
ledit dispositif d'entraînement présente un rapport de transmission, défini comme ledit bras du couple divisé par ledit premier rayon, qui est supérieur à 0,57.

14. Véhicule comprenant au moins deux dispositifs d'entraînement conformes à l'une quelconque des revendications précédentes.
